Europäisches Patentamt

European Patent Office

Office européen des brevets

(11) Publication number: **0 250 652 B1**

(12) **EUROPEAN PATENT SPECIFICATION**

(45) Date of publication of patent specification: **04.09.91**  (51) Int. Cl.⁵: **F16C  33/04**

(21) Application number: **86201140.0**

(22) Date of filing: **27.06.86**

(54) Lightweight high performance titanium sliding contact bearing.

(43) Date of publication of application:
**07.01.88 Bulletin  88/01**

(45) Publication of the grant of the patent:
**04.09.91 Bulletin  91/36**

(84) Designated Contracting States:
**DE FR GB IT NL**

(56) References cited:
**US-A- 2 752 210**
**US-A- 3 535 006**
**US-A- 3 685 878**

(73) Proprietor: **THE BOEING COMPANY**
**P.O. Box 3707 Mail Stop 7E-25**
**Seattle Washington 98124(US)**

(72) Inventor: **Blakely, Lawrence Alexander**
**15031 260 Ave SE**
**Issaquah WA 98027(US)**
Inventor: **Boyer, Rodney Raymond**
**4554 16th Ave SE**
**Issaquah WA 98027(US)**
Inventor: **Dalzell, Lawrence B.**
**15827 52N W. Apt No. 1**
**Edmonds WA 98020(US)**

(74) Representative: **Schumann, Bernard Herman**
**Johan et al**
**OCTROOIBUREAU ARNOLD & SIEDSMA**
**Sweelinckplein 1**
**NL-2517 GK The Hague(NL)**

## Description

The invention relates to lightweight high performance bearings according to the preamble of claim 1 for use in aircraft in which titanium coated with chromium oxide is employed as one of the members used in sliding contact with a second member.

Prior art sliding contact bearings in aircraft have presented excessive weight and Poor overall performance Problems. Sliding bearings used in landing gear, for example, are relatively large and take a substantial load. Weight reduction in such bearings can only be achieved by substituting lower density or more efficient materials, that is, smaller bearing envelopes.

Titanium is a very desirable metal because of its light weight but it had not been used successfully in metal-to-metal sliding surface contact due to severe galling problems. In the prior art no coatings or lubricants had been developed to solve this metal-to-metal bearing problem.

Chromium oxide coating has been used on titanium spherical bearings with a Teflon coated race in hydrofoil applications and in the wing pivot bearing on an F-14 airplane. Although chromium oxide is known to be brittle, it has been found to be satisfactory as a coating and used in a Teflon race because the lubrication is permanent and in situations where there are no significant shock loads which would tend to chip the brittle chromium oxide. That is, there is no risk of losing lubrication with a Teflon race but in situations where a bearing could become grease starved or subject to shock loads, it was considered that chromium oxide would not be a satisfactory coating for titanium or other metals when used against a metal race, including copper or copper alloys. Landing gear trunnion bearings on a large airplane obviously take significant shock loads and, therefore, it was considered that chromium oxide would be too brittle to be used as a coating on a titanium bearing, the titanium being considered primarily as a weight saving material in contrast to the steel bearings being used.

US-A-3 535 006 discloses a self-lubricating bearing, comprising two bearing elements. The first bearing element is made from titanium or titanium base alloys, having a bearing contact surface coated with a ceramic material, namely chromium oxide, titanium dioxide, aluminum oxide, titanium carbide or tungsten carbide. The second bearing element is made of a carbonaceous material, optionally impregnated with a metal, preferably silver. The carbonaceous material imparts the self-lubricating feature of this known bearing.

US-A-2 752 210 discloses a grease lubricated bearing comprising a first bearing element made of metal and provided with a metal carbide coating of which tungsten carbide is the sole example, the second bearing element is made of a non-ferrous material, namely a non-ferrous metal such as lead, copper, silver, tin, indium or aluminum, or non-ferrous alloys, such as bronze, lead base babbit, aluminum alloys, copper base alloys, lead base alloys and sintered mixtures thereof.

The invention provides a combination of contacting sliding bearing members according to claim 1.

Bearings, according to the invention, are typically ring-shaped and comprised of a titanium alloy and having an outer circumferential bearing surface coated with chromium oxide. The race is also generally ring-shaped and is substantially comprised of copper or a copper alloy. The race has an inner generally circumferential surface complementary to the coated surface of the bearing and the bearing is fitted within the race so that the complementary surfaces are positioned for relative sliding-rotation so that the chromium oxide makes bearing contact with the inner circumferential copper, the copper and chromium oxide being lubricated. The bearing and complementary surface in the race may be cylindrical or may be spherical.

It has been found that the use of bearings, according to the invention, in a main landing gear forward trunnion support structure in a large aircraft permits about a 40% weight savings in comparison with steel bearings.

Further advantages of the invention may be brought out in the following part of the specification wherein small details have been described for the competence of the disclosure without intending to limit the scope of the invention which is set forth in the appended claims.

## Brief Description of the Drawing

Referring to the accompanying drawings which are for illustrative purposes:

Fig. 1 is a cutaway pictorial view of a spherical bearing and race according to the invention;

Fig. 2 is an exploded view of the bearing and race shown in Fig. 1;

Fig. 3 is a fragmentary view of a plasma-sprayed chromium oxide coating on a titanium alloy spherical bearing, as shown in Fig. 2, magnified 500 times;

Fig. 4 is a cutaway view of a cylindrical bearing and race according to the invention;

Fig. 5 is a cross-sectional view of a cylindrical bearing and race in which the race is made of titanium and has its inner circumferential surface coated with chromium oxide and the bearing is made of copper; and

Fig. 6 is a cross-sectional view of a spherical bearing in which the race is made of titanium and has its inner circumferential surface coated with chromium oxide and the bearing is made of a copper alloy.

Best Mode for Carrying Out the Invention

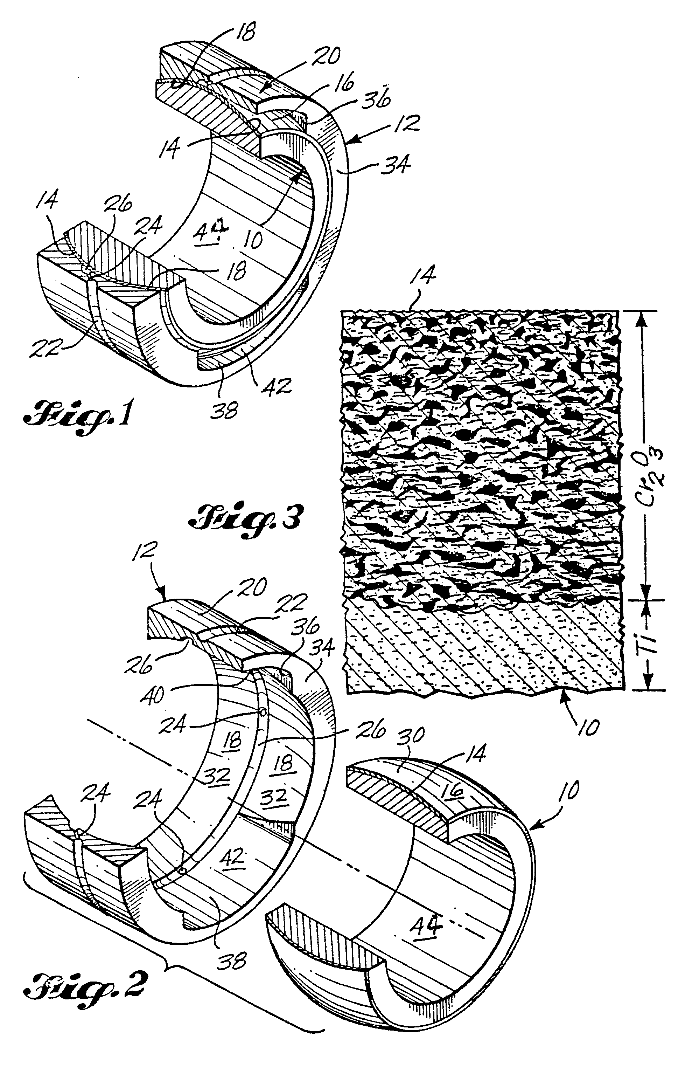

Referring again to the drawings, there are shown in Figs. 1 and 2 cutaway views of slotted-entry, spherical sliding ball bearings 10 and complementary races 12. The bearings 10 are ring-shaped and are made of titanium or of a titanium alloy. They have an outer circumferential surface 14 coated with chromium oxide 16. As shown in Fig. 1, the bearing is fitted within the race 12 which has an inner circumferential surface 18, complementary to the circumferential surface 16 on the bearing.

The outer surface 20 of the race is generally cylindrical and has an annular groove 22 through which extend a plurality of grease passages 24, the passages terminating inwardly in an inner circumferential groove 26 for supplying a continuous coating of grease to the interior of the race at 32 and to the outer circumferential surface of the bearing at 30. The race 12 is made of copper or a copper alloy.

For insertion of the bearing into the race on one side 34 of the race, there are diametrically-spaced slots or grooves 36 and 38, formed so as to be wider than the bearing along its center line, the slots having their outer bottoms 40 and 42 spaced diametrically apart so that distance between them at the race side 34 is greater than the largest diameter of the spherical circumference of the bearing. The slots decrease in depth as they extend inwardly into the race along the direction of its centerline and terminate at the groove 24 so that the distance of the groove 24 is greater from the side 34 than the groove 24 is for the opposite side of the race. Thus, to insert the bearing into the slot, it is positioned so that it can be moved into the slots, that is, with a plane through the bearing and perpendicular to its centerline, positioned perpendicular to a plane perpendicular to the centerline of the race. After the bearing is thus moved inwardly into the race, until it is stopped by the circumferential surface of the bearing spaced away from the slots, the bearing may be then rotated in the race 90°, and it is then held within the bearing by the smaller diameter edges along the opposite flat sides of the race. Inner circumferential surface 44 of the bearing is adapted to be fitted on a journal for rotation therewith or relative thereto.

In Fig. 3 there is a fragmentary cross-sectional view of a bearing 10 made of titanium or a titanium alloy on which a coating of chromium oxide 14 has been plasma-sprayed and which is shown to be mechanically bonded to the titanium. The view is magnified 500 times and the dark spots in the chromium oxide are small holes.

The bearing may be titanium or any common titanium base alloy in which the titanium weight is at least 70%. Well-known titanium alloys such as the following have been used, according to the invention, the amounts being shown by weight:

about 85% Ti, about 10% V, about 2% Fe, and about 3% Al;

about 90% Ti, about 6% Al, and about 4% V; and

about 86% Ti, about 6% Al, about 6% V, and about 2% Sn.

In the race pure copper or any copper base alloy in which the copper weight is at least 80% can be used. In addition, the race can be made of aluminum bronze containing by weight:

about 91% Cu, about 7% Al, and about 2% Fe;

aluminum nickel bronze containing by weight about 81% to 88% Cu, about 9% to 15% Al, and about 4% Ni; and

beryllium-copper containing by weight about 98% Cu, about 2% Be, and traces of Fe and Ni.

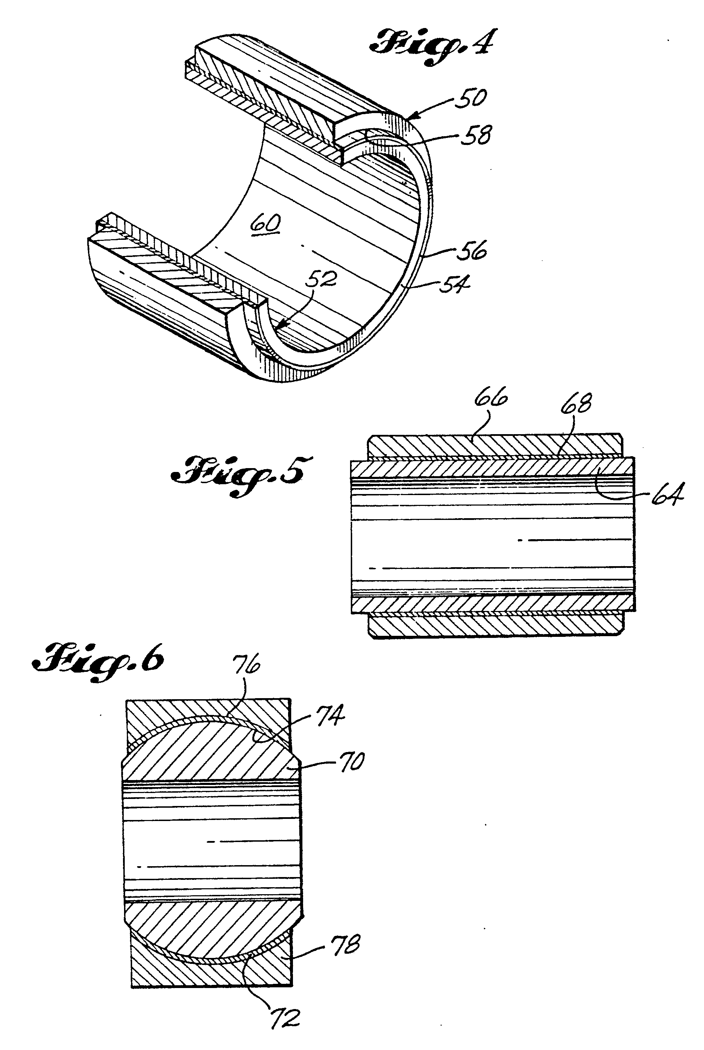

In Fig. 4 a cylindrical race 50 made of copper or a copper alloy has a cylindrical journal bearing 52 made of titanium or a titanium alloy 54 and has a plasma-sprayed chromium oxide coating 56. The cylindrical coating 56 is adapted to be slidably engaged in the inner cylindrical surface 58 of the race, the bearing having an inner cylindrical surface 60 adapted to be fitted on a journal. The inner surface of the race and the outer surface of the bearing are grease lubricated by any conventional manner, as shown in Figs. 1 and 2.

In Fig. 5 an inner cylindrical bearing 64 is made of copper or a copper alloy, and an outer race 66 is made of titanium or a titanium alloy and has its inner cylindrical surface plasma-sprayed with chromium oxide to form a coating 68 for slidable and rotational contact with the bearing 64.

In Fig. 6 still another embodiment of the invention is shown in which a copper or copper alloy bearing 70 has an outer spherical circumferential surface 74 in sliding bearing contact with a complementary internal spherical surface 72 formed of a coating of chromium oxide plasma-sprayed on an inner spherical surface 76 of a titanium or titanium alloy race 78.

The alternate embodiments in Figs. 5 and 6 are grease lubricated between the bearing and race and the copper and titanium alloys may be the same as those described with respect to Figs. 1 and 2.

Tests

2.54 cm (One inch) diameter bore, high-strength Ti alloy spherical balls, namely, 85Ti-10V-2Fe-3A1 (numbers indicate percentages by weight), were fabricated and installed in slotted-entry Be-Cu races, as seen in Figs. 1 and 2. These bearings were tested in dynamic cyclic wear tests and fatigue tests to simulate the jarring action or shock loading a bearing may experience. Chromium plated stainless steel spherical balls, of the same shape as shown in Figs. 1 and 2, were tested in the same type of Be-Cu races, which are a more or less standard aircraft bearing combination.

Under severe conditions, that is, grease-starved condition or ingestion of contaminated grease, the chromium oxide on the Ti balls, according to the invention, were much superior to the stainless steel bearings, as indicated in Table I below.

An outstanding result occurred in a test where the bearing was lubricated at the start of a dynamic cyclic wear test with no additional grease added through the duration of the test of 100,000 cycles. A cycle generally consists of a plus and minus 20° oscillation at various bearing stresses starting with 41.4 MPa (6 ksi.), which are typical service conditions for a forward trunnion bearing on a landing gear of a large commercial airplane. The torque had reached a maximum and was decreasing at the conclusion of the test. This data, and examination of the bearing, indicating that the bearing was still functional after 100,000 cycles.

The dynamic cyclic wear tests were conducted at 15 cycles/minute with a plus and minus 20° oscillation, as stated. The required grease lubrication cycles were established by monitoring the torque and temperature of the bearings during initial testings. Tests were performed using clean and contaminated grease.

The tension-compression fatigue tests assess the ability of brittle coatings to withstand some of the jarring action that may be encountered by spherical bearings. The test loads started with those experienced by typical trunnion support bearings and then were raised to higher stresses.

Four titanium bearings, according to the invention, plasma-sprayed with chromium oxide coating and four steel bearings, chromium plated, were tested. The test results are shown in Table I.

Bearing No. 1 was tested to 100,000 cycles at 41.4 MPa (6 ksi.) bearing stress with no wear on the spherical ball and minimal wear on the race (periodic lubrication was performed every 900 cycles). The torque decreased over 50% from the start to the end of the test, indicating that no seizing was occurring. Bearing No. 2 was tested to 1720 cycles under the same conditions as above. The bearing stress was then increased 50% to 62.1 MPa (9 ksi). The testing result after 100,000 cycles was the same as for number 1, that is, no wear on the ball and minimal wear on the race. The torque this time decreased from 324.7 to 114.0 Nm (2925 to 1027 in.-lb). from the beginning to the end of the test.

The number I chromium-plated steel bearing was tested at 62.1 Mpa (9 ksi). with the same results. It started out with a lower torque value, 222.2 Nm (2002 in.-lb.), but after 100,000 cycles had the same torque value as the titanium number 2 with chromium oxide coating. In comparing the chromium oxide coated titanium bearing, number 2, with the number I steel bearing, there was no wear on the former and there was minimal wear on its race but on the chromium plated steel bearing there was copper pick-up on the chromium plating.

In order to examine the effect of contaminants on the chromium oxide coating, the number 3 titanium bearing was subjected to the same test conditions, as above, at 41.4 MPa (6 ksi). with contamination introduced to simulate particles ingestion possible in actual service conditions. The bearing was lubricated normally every 900 cycles, but on every fourth lubrication cycle it was lubricated with grease containing 10% by volume of road dust. In addition there was a constant drip of deicing fluid diluted with 50% water. The result for the number 3 bearing was the same as for the number 1 and 2 without contaminant, no wear on the ball, except that the final torque after the test was about 54.2 Nm (488 in.-lb). The steel bearings II and III were tested to 100,000 cycles in the same manner. They had somewhat higher torque at the end 81.6 and 83.7 Nm (735 and 754 in.-lb). The chromium plate on the steel balls was torn in spots, and extensive wear of the races was observed.

The above titanium bearings with the plasma-sprayed chromium oxide coating were rotated to load the opposite ball and race surfaces. In the Table they are marked 1*, 2*, and 3*. Bearing test No. 1* was the same as for No. 1 to verify the excellent results from the previous contamination test. The results were the same as for the first test but the torque values were lower as shown on the Table. The bearing stress for No. 2* was increased to 89.6 MPa (13 ksi.), the maximum allowable for grease lubricated bearings. The bearing was lubricated with clean grease every 900 cycles. The temperature build-up resulting from the friction between the ball and race with this loading was sufficient to discolor the outer race. After 100,000 cycles no noticeable wear was observed on the ball. In the test of No. 3* the loading was dropped back 41.4 MPa (6 ksi)., but the ball was only lubricated at the start of the test. No significant wear was observed on the ball after 100,000 cycles but minor pitting of the coating had occurred.

The chromium plated stainless steel bearings did not perform as well as the plasma-sprayed chromium oxide titanium balls under the more severe test conditions. Two contaminated grease tests, bearings II and III, survived 100,000 cycles but the chromium plating was worn off in areas. The chromium plating was also worn through extensively on test bearing No. IV which was only lubricated at the start of the test comparable to titanium bearing No. 3*. The test was stopped after about 80,000 cycles as the high torque was wearing out the drive sockets of the test machine. The maximum torque was about 86% higher than the plasma-sprayed chromium oxide for the comparable test for No. 3*.

The durability of the brittle ceramic chromium oxide coating was a matter of concern before testing. One titanium ball, No. 4, was subjected to tension-compression fatigue tests to observe its behavior under this jarring action. The starting point stress cycle was +34.5 to -6.9 MPa (+5 to -1 ksi), which is the maximum stress that the candidate trunnion bearing would experience. All testing was done at 30 $H_z$ using sine-wave loading. The bearings were inspected after 150,000 cycles of test and showed no visible damage. Then the loads were incrementally increased by 50% and tested another 150,000 cycles. Testing was terminated at +137.9 MPa +20 ksi. to -27.6 MPa (-4 ksi.) with no damage. After that, the No. 4 ball was dynamic cyclic wear tested at the same condition as the No. 1 to 100,000 cycles. There was no wear found on the titanium balls.

In Fig. 3 the plasma-sprayed chromium oxide is on an 85Ti-10V-2Fe-3Al alloy ball. The thickness of the coating is about 120-170 $\mu$m. No evidence of oxygen diffusion in the base metal was found. The tests are compiled in Table I below.

TABLE I

| Bearing No. | Spherical Ball Material | Coatings on the ball | Bearing stress (psi) * | Contamination in lubricant | Torque (in-lb) **** At 100 Cycles | At end of test | Cycles | Comments |
|---|---|---|---|---|---|---|---|---|
| 1. | 85Ti-10V-2Fe-3Al ** | Plasma-sprayed $Cr_2O_3$ Coating | 6000 | None | 2295 | 1027 | 100,000 | No wear on ball Minimal wear on outer race |
| 2. | 85Ti-10V-2Fe-3Al | Plasma-sprayed $Cr_2O_3$ Coating | 9000 | None | 2925 | 1027 | 100,000 | Same as above |
| 3. | 85Ti-10V-2Fe-3Al | Plasma-sprayed $Cr_2O_3$ Coating | 6000 | Yes | 3218 | 488 | 100,000 | No wear on ball |
| 4. | 85Ti-10V-2Fe-3Al | Plasma-sprayed $Cr_2O_3$ Coating | 6000 | Yes | 1612 | 293 | 100,000 | No wear on ball |
| 1* | 85Ti-10V-2Fe-3Al | Plasma-sprayed $Cr_2O_3$ Coating | 6000 | Yes | 1196 | 806 | 100,000 | No wear on ball |
| 2* | 85Ti-10V-2Fe-3Al | Plasma-sprayed $Cr_2O_3$ Coating | 13000 | None | 2438 | 1268 | 100,000 | No wear on ball Outer race shows high temperature discoloration |
| 3* | 85Ti-10V-2Fe-3Al | Plasma-sprayed $Cr_2O_3$ Coating | 6000 | None | 488 | 1365 | 100,000 | Minor Copper pick-up on ball. Only greased at start of test. Minor coating pitting. |
| **Numbers indicate percentages by weight | | | | | | | | |
| I. | Steel | Chromium-plated | 9000 | None | 2002 | 975 | 100,000 | No wear on ball, minor copper pick-up on ball |
| II. | Steel | Chromium-plated | 6000 | Yes | 1222 | 735 | 100,000 | Wear thru chromium plate, minor copper pick-up on ball |
| III. | Steel | Chromium-plated | 6000 | Yes | 780 | 754 | 100,000 | Wear thru chromium plate, minor copper pick-up on ball |
| IV. | Steel | Chromium-plated | 6000 | No | 734 | 2002*** | 80,026 | greased only at start chromium plate worn through, Cu pick-up on ball, extensive wear of race. |

***Max. torque was 2535 in-lb. ****

**** for conversion to Nm multiply by 0.111.

* for conversion to Mpa multiply by 0.0069

## Claims

1. A combination of contacting sliding bearing members (10,12; 52,50; 64,66; 78,70), comprising:
   a first bearing member (10; 52; 66; 78) being substantially comprised of Ti or a Ti alloy having a bearing contact surface coated with $Cr_2O_3$; and
   a second bearing member (12; 50; 64; 70),
   **characterized in that** the bearing contact between the first bearing member (10; 52; 66; 78) and the second bearing member (12; 50; 64; 70) is grease lubricated and that the second bearing member (12; 50; 64; 70) being substantially comprised of Cu or a Cu alloy.

2. Combination according to claim 1 in which the Ti alloy comprises at least 70% by weight Ti.

3. Combination according to claim 2 in which the Ti alloy is selected from the group consisting by weigth of: about 85% Ti, about 10% V, about 2% Fe, and about 3% Al;
   about 90% Ti, about 6% Al, and about 4% V; and
   about 86% Ti, about 6% Al, about 6% V, and about 2% Sn.

4. Combination according to claim 1-3 in which the Cu alloy comprises at least 80% by weight Cu.

5. Combination according to claim 4 in which the Cu alloy is selected from the group consisting of:
   aluminium bronze containing by weight about 91% Cu, about 7% Al, and about 2% Fe;
   aluminium nickel bronze containing by weight about 81% to 88% Cu, about 9% to 15% Al, and about 4% Ni; and
   beryllium-copper containing by weight about 98% Cu, about 2% Be, and traces of Fe and Ni.

6. Combination according to claim 1, 4 or 5 in which Ti is substantially pure Ti.

7. Combination according to claim 1-3 or 6 in which Cu is substantially pure Cu.

8. Combination according to claim 1-7 in which:
   said first member (10; 54) being a ring-shaped bearing;
   said $Cr_2O_3$ coating (16; 56) being on an outer circumferential surface of said first member (10; 54);
   said second member (12; 50) being an outer bearing race;
   said first member (10; 54) being fitted within said second member (12; 50) for relative sliding-rotation so that said $Cr_2O_3$ makes bearing contact with said Cu.

9. Combination according to claim 1-7 in which:
   said first member (54) is a ring-shaped bearing having an outer spherical circumferential bearing surface;
   said $Cr_2O_3$ coating (56) being on said spherical surface;
   said second member (50) being an outer bearing race;
   said second member (50) having completely spherical surfaces to receive the spherical surface of said first member (54);
   said first member (54) being fitted within said second member (50) for relative sliding-rotation so that said $Cr_2O_3$ makes bearing contact with said Cu.

10. The combination according to claim 1-7 in which:
   said first member (66; 78) being an outer bearing race;
   said $Cr_2O_3$ coating (68; 72) being on an internal circumferential surface of said first member (66; 78);
   said second member (64; 70) being a ring-shaped bearing;
   said second member (64; 70) being fitted within said first member (66; 78) for relative sliding-rotation so that said Cu makes bearing contact with said $Cr_2O_3$.

**Revendications**

1. Combinaison d'organes de coussinet en contact glissant (10, 12 ; 52, 50 ; 64, 66 ; 78, 80) comprenant
   un premier organe de coussinet (10 ; 52 ; 66 ; 78) pratiquement forme de titane ou d'un alliage de titane ayant une surface de contact revêtue de $Cr_2O_3$, et
   un second organe de coussinet (12 ; 50 ; 64 ; 70),
   caractérisée en ce que le contact entre le premier organe (10 ; 52 ; 66 ; 78) et le second organe (12 ; 50 ; 64 ; 70) de coussinet est lubrifié par une graisse, et en ce que le second organe (12 ; 50 ; 64 ; 70) de coussinet est pratiquement formé de cuivre ou d'un alliage de cuivre.

2. Combinaison selon la revendication 1, dans laquelle l'alliage de titane contient au moins 70 % en poids de titane.

3. Combinaison selon la revendication 2, dans laquelle l'alliage de titane est choisi dans le groupe qui comprend, en pourcentages pondéraux :
   85 % environ de Ti, 10 % environ de v, 2 % environ de Be, et 3 % environ de Al,
   90 % environ de Ti, 6 % environ de Al et 4 % environ de V, et
   86 % environ de Ti, 6 % environ de Al, 6 % en V et 2 % environ de Sn.

4. Combinaison selon la revendication 1-3, dans laquelle l'alliage de cuivre contient au moins 80 % en poids de cuivre.

5. Combinaison selon la revendication 4, dans laquelle l'alliage de cuivre est choisi dans le groupe qui comprend

le bronze d'aluminium contenant, en poids, 91 % environ de Cu, 7 % environ de Al, et 2 % environ de Fe,

le bronze de nickel-aluminium contenant, en poids, 81 % à 88 % environ de Cu, 9 à 15 % environ de Al et 4 % environ de Ni, et

le cuivre au béryllium contenant, en poids, 98 % environ de Cu, 2 % environ de Be et des traces de Fe et Ni.

6. Combinaison selon la revendication 1, 4 ou 5, dans laquelle le titane est pratiquement du titane pur.

7. Combinaison selon la revendication 1-3 ou 6, dans laquelle le cuivre est pratiquement du cuivre pur.

8. Combinaison selon les revendications 1-7, dans laquelle

le premier organe (10 ; 54) est un coussinet de forme annulaire,

le revêtement de $Cr_2O_3$ (16 ; 56) se trouve à une surface circonférentielle externe du premier organe (10 ; 54),

le second organe (12 ; 50) est une bague externe,

le premier organe (10 ; 54) est placé dans le second organe (12 ; 50) afin qu'ils puissent tourner en glissant l'un par rapport à l'autre si bien que $Cr_2O_3$ est en contact avec le cuivre.

9. Combinaison selon la revendication 1-7, dans laquelle

le premier organe (54) est un coussinet de forme annulaire ayant une surface circonférentielle sphérique externe,

le revêtement de $Cr_2O_3$ (56) est placé sur la surface sphérique,

le second organe (50) est une bague externe,

le second organe (50) a des surfaces totalement sphériques, destinées à coopérer avec la surface sphérique du premier organe (54), et

le premier organe (54) est logé dans le second organe (50) afin qu'il permette une rotation par glissement relatif, si bien que $Cr_2O_3$ est en contact avec le cuivre.

10. Combinaison selon la revendication 1-7, dans laquelle

le premier organe (66 ; 78) est une bague externe de coussinet,

le revêtement de $Cr_2O_3$ (68 ; 72) est placé à la surface circonférentielle interne du premier organe (66 ; 78),

le second organe (64 ; 70) est un coussinet de forme annulaire,

le second organe (64 ; 70) est logé dans le premier organe (66 ; 78) afin qu'ils puissent tourner en glissant mutuellement si bien que le cuivre est en contact avec $Cr_2O_3$.

**Patentansprüche**

1. Kombination von einander berührenden Gleitlagerteilen (10, 12; 52, 50; 64, 66; 78, 70), umfassend:

ein erstes Lagerteil (10; 52; 66; 78), das im wesentlichen aus Ti oder einer Ti-Legierung besteht, welches bzw. welche eine Lagerkontaktoberfläche hat, die mit $Cr_2O_3$ beschichtet ist; und

ein zweites Lagerteil (12; 50; 64; 70),

dadurch **gekennzeichnet**, daß der Lagerkontakt zwischen dem ersten Lagerteil (10; 52; 66; 78) und dem zweiten Lagerteil (12; 50; 64; 70) schmiermittelgeschmiert ist, und daß das zweite Lagerteil (12; 50; 64; 70) im wesentlichen aus Cu oder einer Cu-Legierung besteht.

2. Kombination nach Anspruch 1, worin die Ti-Legierung wenigstens 70 Gew.-% Ti enthält.

3. Kombination nach Anspruch 2, worin die Ti-Legierung aus der Gruppe ausgewählt ist, die gewichtsprozentual besteht aus: etwa 85 % Ti, etwa 10 % V, etwa 2 % Fe, und etwa 3 % Al;

etwa 90 % Ti, etwa 6 % Al, und etwa 4 % V; und

etwa 86 % Ti, etwa 6 % Al, etwa 6 % V, und etwa 2 % Sn.

4. Kombination nach Anspruch 1 bis 3, worin die Cu-Legierung wenigstens 80 Gew.-% Cu enthält.

5. Kombination nach Anspruch 4, worin die Cu-Legierung aus der Gruppe ausgewählt ist, die besteht aus:
Aluminiumbronze, die gewichtsmäßig etwa 91 % Cu, etwa 7 % Al und etwa 2 % Fe enthält;
Aluminium-Nickel-Bronze, die gewichtsmäßig etwa 81 % bis 88 % Cu, etwa 9 % bis 15 % Al, und etwa 4 % Ni enthält; und
Beryllium-Kupfer, das gewichtsmäßig etwa 98 % Cu, etwa 2 % Be, und Spuren von Fe und Ni enthält.

6. Kombination nach Anspruch 1, 4 oder 5, worin Ti im wesentlichen reines Ti ist.

7. Kombination nach Anspruch 1 bis 3 oder 6, worin Cu im wesentlichen reines Cu ist.

8. Kombination nach Anspruch 1 bis 7, worin:
das erste Teil (10; 54) ein ringförmiges Lager ist;
die $Cr_2O_3$-Beschichtung (16; 56) auf einer äußeren Umfangsoberfläche des ersten Teils (10; 54) ist;
das zweite Teil (12; 50) ein äußerer Laufring ist;
das erste Teil (10; 54) innerhalb des zweiten Teils (12; 50) zur relativen Gleitrotation so angebracht ist, daß das $Cr_2O_3$ Lagerkontakt mit dem Cu bildet.

9. Kombination nach Anspruch 1 bis 7, worin:
das erste Teil (54) ein ringförmiges Lager ist, das eine äußere sphärische Umfangslageroberfläche hat;
die $Cr_2O_3$-Beschichtung (56) auf der sphärischen Oberfläche ist;
das zweite Teil (50) ein äußerer Laufring ist;
das zweite Teil (50) vollständig sphärische Oberflächen zur Aufnahme der sphärischen Oberfläche des ersten Teils (54) hat;
das erste Teil (54) innerhalb des zweiten Teils (50) zur relativen Gleitrotation so angebracht ist, daß das $Cr_2O_3$ Lagerkontakt mit dem Cu bildet.

10. Kombination nach Anspruch 1 bis 7, worin:
das erste Teil (66; 78) ein äußerer Laufring ist;
die $Cr_2O_3$-Beschichtung (68; 72) auf einer inneren Umfangsoberfläche des ersten Teils (66; 78) ist;
das zweite Teil (64; 70) ein ringförmiges Lager ist;
das zweite Teil (64; 70) innerhalb des ersten Teils (66; 78) zur relativen Gleitrotation so angebracht ist, daß das Cu Lagerkontakt mit dem $Cr_2O_3$ bildet.

*Fig.1*

*Fig.3*

*Fig.2*

*Fig.4*

50
58
60
56
54
52

*Fig.5*

66
68
64

*Fig.6*

76
74
70
78
72